# EUROPEAN PATENT SPECIFICATION

(11) **EP 2 778 196 B1**
(45) Date of publication and mention of the grant of the patent: **03.02.2016**
(21) Application number: 14159369.9
(22) Date of filing: 13.03.2014
(51) Int. Cl.: C08K 5/00, C08K 5/49, C08L 55/02, C08J 11/04, C08J 11/28, C08L 9/06

(54) **Reclaimed resin composition, molding, image forming apparatus, and method for producing reclaimed resin composition**
Regenerierte Harzzusammensetzung, Form, Bilderzeugungsvorrichtung, und Verfahren zur Herstellung einer regenerierten Harzzusammensetzung
Composition de résine de récupération, moulage, appareil de formation d'image et procédé de production de composition de résine de récupération

(30) Priority: 15.03.2013 JP 2013053883
(43) Date of publication of application: 17.09.2014
(73) Proprietor: Ricoh Company, Ltd., Tokyo 143-8555 (JP)
(72) Inventor: Akiba, Yasushi, Tokyo, 143-8555 (JP); Harada, Tadakatsu, Tokyo, 143-8555 (JP); Katoh, Hideki, Hyogo, 661-0011 (JP)
(74) Representative: Lamb, Martin John Carstairs

(56) References cited:
- EP-A1- 0 947 547
- EP-A1- 1 050 559
- JP-A- 2010 046 894
- US-A1- 2005 203 196
- US-A1- 2006 183 827
- US-A1- 2007 155 874
- US-A1- 2007 259 999
- US-A1- 2011 034 597

## Description

### BACKGROUND OF THE INVENTION

### Field of the Invention

The present invention relates to a reclaimed resin composition, a molding, an image forming apparatus, and a method for producing a reclaimed resin composition.

### Description of the Related Art

Recently, along with rising concerns for environmental conservation, activities for recycling and reclaiming various materials are increasing. Above all, the amount of resins, representatively, acrylonitrile butadiene styrene copolymer resins (ABS resins) contained in the products like home appliances are increasing, because the resins allow great design latitudes and are lightweight and highly durable. Therefore, as laws and regulations are developed such as "Act for Recycling of Specified Kinds of Home Appliances" (Act No. 97 Year 1998: popularly, "Home Appliance Recycling Act"), research and development are promoted for finding techniques for recycling resins in wastage while giving low environmental impacts.

When moldings containing resins are used for image forming apparatuses, automobiles, home appliances, etc., the resins are required to have flame retardancy for prevention of fire spreading. For example, Japanese Patent Application Laid-Open (JP-A) No. 2002-16742 discloses a method for producing an ABS alloy resin having flame retardancy by using ABS-resin-based parts as materials.

### SUMMARY OF THE INVENTION

However, the method described in JP-A No. 2002-16742 is costly and problematic in that the reclaimed materials to be obtained will be expensive.

When a reclaimed resin composition is used for constructions, it must meet predetermined requirements in terms of not only flame retardancy but also strength properties such as impact resistance.

In view of the problems described above, an object of the present invention is to provide a reclaimed resin composition that satisfies flame retardancy and impact resistance at the same time and is inexpensive.

A reclaimed resin composition of the present invention includes:
recovered acrylonitrile butadiene styrene copolymer resin;
additional acrylonitrile butadiene styrene copolymer resin; and
a phosphorus-based flame retardant,
wherein the amount of butadiene relative to the total mass of the reclaimed resin composition is from 10% by mass to 18% by mass.

The present invention can provide a reclaimed resin composition that satisfies flame retardancy and impact resistance at the same time and is inexpensive.

### BRIEF DESCRIPTION OF THE DRAWINGS

Fig. 1 is a schematic diagram for explaining the ratio of ABS resin relative to the amount of resins used in representative home appliances.
Fig. 2 is a flow diagram of an example method for producing a reclaimed resin composition of the present embodiment.
Fig. 3 is a schematic configuration diagram of an example image forming apparatus to which a reclaimed resin composition of the present embodiment is applicable.

### DETAILED DESCRIPTION OF THE INVENTION

The invention will now be explained in detail with reference to the drawings.

A reclaimed resin composition of the present embodiment contains a recovered acrylonitrile butadiene styrene copolymer resin, an additional acrylonitrile butadiene styrene copolymer resin (hereinafter may be referred to as "addition-purpose ABS resin"), and a phosphorus-based flame retardant. Each component will now be explained in detail.

### (Recovered ABS Resin)

"Recovered acrylonitrile butadiene styrene copolymer resin (recovered ABS resin)" in the present embodiment means acrylonitrile butadiene styrene copolymer resin recovered from wastage, etc.

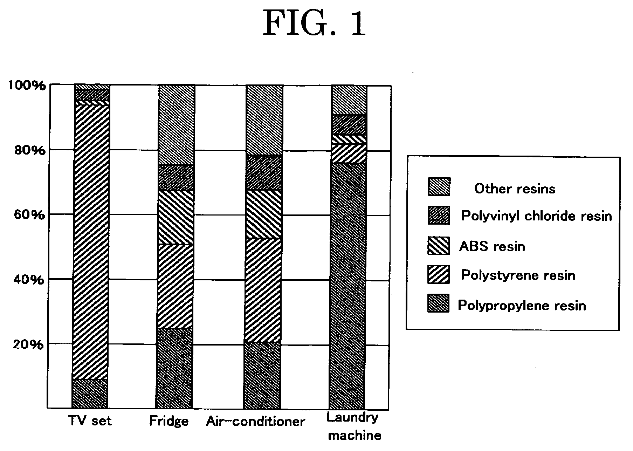

Fig. 1 shows a schematic diagram for explaining the ratio of ABS resin relative to the amount of resins used in representative home appliances. In Fig. 1, the horizontal axis indicates the names of the appliances, and the vertical axis indicates the ratios of the respective resins used.

As shown in Fig. 1, ABS resin is used in refrigerators and air-conditioners in large amounts, such as from about 10% to about 20%. The ABS resin used in the refrigerators and air-conditions are generally ones including butadiene in large amounts, in order to secure physical properties such as strength under low temperatures or high temperatures.

However, wastage targeted as the recovered ABS resin of the present embodiment is not limited to the refrigerators and air-conditioners, but also includes TV sets, laundry machines, automobiles, other OA (Office Automation) machines, etc. Resin to be recovered from wastage may be one derived from wastage used in general households, or may be one recovered from unused wastage occurred in the production process.

In a refrigerator, the ABS resin is used in, for example, inner box, operation panel, handle, cap, etc. In an air-conditioner, the ABS resin is used in, for example, front panel, fan, sirocco fan, outer housing, air vent, air deflector, etc.

Examples of commercially-available products of ABS resin used for the above applications include, as product names, UMG ABS (manufactured by UMG ABS Ltd.), TECHNO ABS (manufactured by Techno Polymer Co., Ltd.), SANTAC (manufactured by Nippon A&L Inc.), and TOYOLAC (manufactured by Toray Industries, Inc.).

### (Addition-Purpose ABS Resin)

The addition-purpose ABS resin in the present embodiment is not particularly limited, and may be ABS resin produced by chemical synthesis or the like. The addition-purpose ABS resin may also be a commercially-available product, in which case, usable examples include UMG ABS (manufactured by UMG ABS Ltd.), TECHNO ABS (manufactured by Techno Polymer Co., Ltd.), SANTAC (manufactured by Nippon A&L Inc.), and TOYOLAC (manufactured by Toray Industries, Inc.) listed above.

The content of the recovered ABS resin and the addition-purpose ABS resin in the reclaimed resin composition is such that the amount of butadiene relative to the total mass of the reclaimed resin composition (i.e., the total amount of the recovered ABS resin, the addition-purpose ABS resin, and the phosphorus-based flame retardant described below) may be from 10% by mass to 18% by mass, preferably from 10% by mass to 16% by mass.

Here, the "butadiene" means butadiene as a monomer component that constitutes the recovered ABS resin and the addition-purpose ABS resin.

That is, the amount of butadiene as a monomer component that constitutes the recovered ABS resin and the addition-purpose ABS resin in the reclaimed resin composition is from 10% by mass to 18% by mass, preferably from 10% by mass to 16% by mass, relative to the total mass of the reclaimed resin composition.

It is possible to obtain a reclaimed resin component that satisfies flame retardancy and impact strength at the same time, by including the recovered ABS resin, the addition-purpose ABS resin, and the phosphorus-based flame retardant described below such that the amount of butadiene is from 10% by mass to 18% by mass relative to the total mass of the reclaimed resin composition.

### (Phosphorus-Based Flame Retardant)

The phosphorus-based flame retardant of the present embodiment is not particularly limited and may be a commercially-available phosphorus-based flame retardant. Specific examples thereof include triphenyl phosphate, cresyl phenyl phosphate, tricresyl phosphate, trixylenyl phosphate, tris(t-butylated phenyl)phosphate, tris(i-propylated phenyl)phosphate, 2-ethylhexyldiphenyl phosphate, 1,3-phenylenebis(diphenyl phosphate), 1,3-phenylenebis(dixylenyl)phosphate, bisphenol A (diphenyl phosphate), tris(dichloropropyl)phosphate, tris(β-chloropropyl)phosphate, tris(chloroethyl)phosphate, 2,2-bis(chloromethyl)trimethylenebis(bis(2-chloroethyl)phosphate), polyoxyalkylenebisdichloroalkyl phosphate, and red phosphorus.

### (Other Components)

The reclaimed resin composition of the present embodiment may contain other components. Examples of the other components include compatibilizing agent, plasticizer, antioxidant, ultraviolet absorber, processing aid, antistat, colorant, and hydrolysis suppressor. These agents may be publicly-known ones, and according to the desired application, may be blended with other components selected appropriately by a person skilled in the art.

### (Flow of Method for Producing Reclaimed Resin Composition)

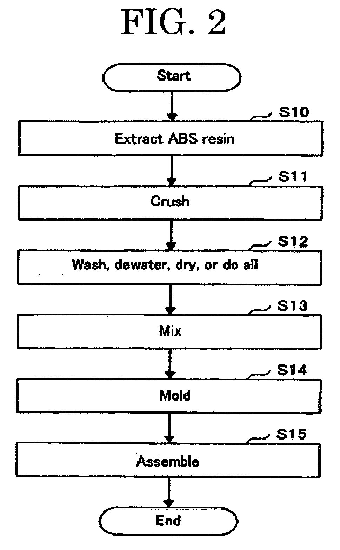

Next, a method for producing the reclaimed resin composition will be explained with reference to the drawings. Fig. 2 shows a flow diagram of an example method for producing the reclaimed resin composition of the present embodiment. In the present embodiment, a flow from recover of ABS resin from waste home appliances to reuse thereof for OA machines will be described as an example. However, the present invention is not limited in this regard.

First, ABS resin is extracted from waste home appliances collected in accordance with Home Appliance Recycling Act as shown at S10. Next, the recovered ABS resin is crushed as shown at S11. The crushing degree is not particularly limited, as long as the crushed ABS resin can be re-compounded.

The crushed ABS resin (recovered ABS resin) is washed, dewatered, and dried (S12), and then passed to the next step.

Next, the recovered ABS resin is mixed with the addition-purpose ABS resin and the phosphorus-based flame retardant (S13). The mixing method is not particularly limited, and examples thereof include a method of dry-blending them, feeding the resulting mixture to a hopper, and melt-kneading the mixture.

In the mixing, the recovered ABS resin, the addition-purpose ABS resin, and the phosphorus-based flame retardant are mixed at a mixing ratio at which the amount of butadiene relative to the total mass of the mixture to be obtained will be from 10% by mass to 18% by mass, preferably from 12% by mass to 16% by mass, to thereby obtain a reclaimed resin composition.

Mixing of the addition-purpose ABS resin, which is a virgin material, efficiently improves flame drip during combustion, and can hence reduce the amount of flame retardant to be used. Therefore, a recycling rate that greatly surpasses the conventional recovered material utilization rate can be achieved. That is, the reclaimed resin composition of the present embodiment has flame retardancy, can save recycling costs, realizes efficient recycling of waste resin materials as resources, can save the amount of fresh and unused petroleum resin to be fed, and is environmentally low hazardous. It can also contribute to low carbon society, as an environmentally low-impact resin that can be used in recyclable society.

The obtained reclaimed resin composition is re-compounded, and after this, molded into a desired plastic component (S14), and assembled into an OA machine (S15).

The method for molding the reclaimed resin composition of the present embodiment is not particularly limited, and examples thereof include injection molding, extrusion molding, hot-press molding, etc. Hence, the reclaimed resin composition of the present embodiment can be used as, for example, a member of an office machine that has a complex shape, and can reduce environmental impact.

### (Image Forming Apparatus)

A molded member obtained by molding the reclaimed resin composition of the present embodiment can be used as a component of an image forming apparatus used in, for example, electrophotography, print technology, or inkjet technology, and particularly as a component to be used inside an image forming apparatus. An example in which the reclaimed resin composition of the present embodiment is used in a tandem indirect transfer type image forming apparatus will be explained as an example.

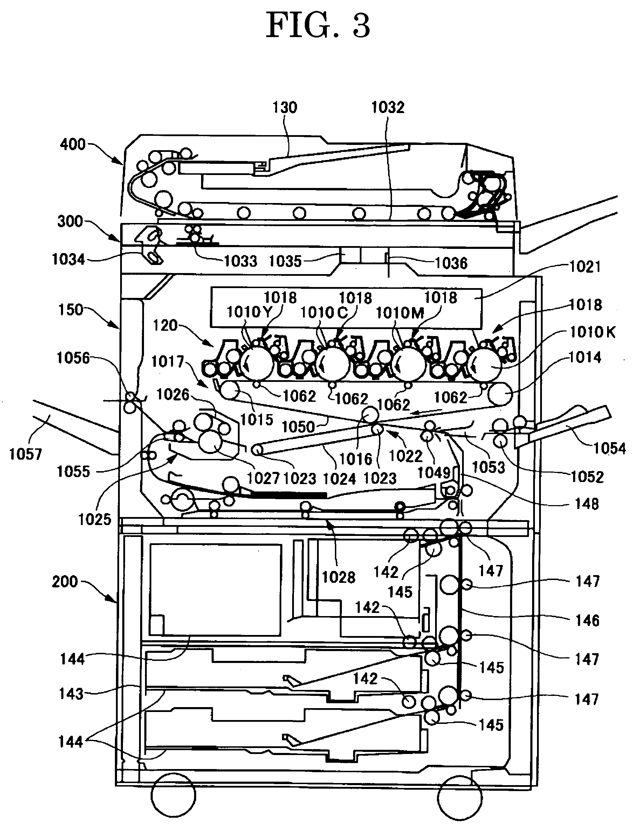

Fig. 3 shows an example schematic configuration diagram of an image forming apparatus to which the reclaimed resin composition of the present embodiment can be applied.

An image forming apparatus of the present embodiment is a tandem indirect transfer type image forming apparatus, for example. The reclaimed resin composition of the present embodiment can be used as housing structures of various modules such as an image forming unit 1018, an intermediate transfer member 1050, and a second transfer device 1022 to be described below, although not limited to these. These housing structures are required to have dimensional precision and high strength in order to for stable image forming quality to be realized, and also required to have sufficient flame retardancy because they are disposed near a fixing device 1025. Therefore, ABS resin that meets V-2 grade of UL 94 standard has conventionally been used.

A molding of the reclaimed resin composition of the present embodiment is preferably manufactured with identifiable material composition information such as the kinds of the materials, grades, etc. This enables the reclaimed resin composition to be utilized again after it is consumed in the market and collected, which enables further reduction of environmental impact.

The image forming apparatus 100 includes an apparatus body 150, sheet feeding table 200 on which the apparatus body is mounted, a scanner 300, and an automatic document feeder (ADF) 400.

An endless-belt-shaped intermediate transfer member 1050 is provided in approximately the center of the apparatus body 150.

The intermediate transfer member 1050 is tensed over support rollers 1014, 1015, and 1016, and is rotatable clockwise, for example. An intermediate transfer member cleaning device 1017 is provided near the support roller 1015, for removing residual toner on the intermediate transfer member 1050.

Above the intermediate transfer member 1050 tensed between the support rollers 1014 and 1015, there is provided a tandem developing device 120 including four image forming units 1018 for yellow, cyan, magenta, and black that face the intermediate transfer member and are arranged side by side along the conveying direction of the intermediate transfer member.

An exposing device 1021 is provided near the tandem developing device 120.

A second transfer device 1022 is provided on a side of the intermediate transfer member 1050 opposite to the side thereof on which the tandem developing device 120 is provided. In the second transfer device 1022, a second transfer belt 1024, which is an endless belt, is tensed between a pair of rollers 1023. A transfer sheet conveyed over the second transfer belt 1024 and the intermediate transfer member 1050 can contact each other.

A fixing device 1025 is provided near the second transfer device 1022. The fixing device 1025 includes a fixing belt 1026, which is an endless belt, and a pressurizing roller 1027, which is provided pressed by the fixing belt. A sheet overturning device 1028 for overturning a transfer sheet in order for images to be formed on both sides of the transfer sheet is provided near the second transfer device 1022 and the fixing device 1025. A transfer roller or a contactless charger may be provided as the second transfer device.

Next, formation of a full-color image with the tandem developing device 120 will be explained. First, a document is set on a document table 130 of the automatic document feeder (ADF) 400, or alternatively, the automatic document feeder 400 is opened, the document is set on a contact glass 1032 of the scanner 300, and then the automatic document feeder 400 is closed. When a start switch not shown is depressed, the scanner 300 is started and a first traveling member 1033 and a second traveling member 1034 are started to run, after the document is conveyed and moved onto the contact glass 1032 when the document has been set on the automatic document feeder 400, or immediately after the start switch is depressed when the document has been set on the contact glass 1032.

Then, the document is irradiated with light from the light source by the first traveling member 1033, and light reflected from the surface of the document is reflected on a mirror of the second traveling member 1034 to be received by a reading sensor 1036 through an imaging lens 1035. Through this, the color image is read as image information of black, yellow, magenta, and cyan.

Furthermore, when the start switch not shown is depressed, a driving motor not shown starts one of the support rollers 1014, 1015, and 1016 to rotate and induces following rotation of the remaining two support rollers to thereby convey the intermediate transfer member 1050 to rotate.

The image information for each of black, yellow, magenta, and cyan is transmitted to the corresponding image forming unit 1018 (black image forming unit, yellow image forming unit, magenta image forming unit, or cyan image forming unit) of the tandem developing device 120, and toner images of the respective colors are formed by the respective image forming units.

The image forming units 1018 each include an electrostatic latent image bearing member 1010 (black electrostatic latent image bearing member 1010K, yellow electrostatic latent image bearing member 1010Y, magenta electrostatic latent image bearing member 1010M, or cyan electrostatic latent image bearing member 1010C), and a charging device configured to electrically charge the electrostatic latent image bearing member 1010 uniformly. The image forming units each further include an exposing device configured to expose the electrostatic latent image bearing member to light imagewise like the image corresponding to the corresponding color image based on the corresponding color image information to thereby form an electrostatic latent image corresponding to the corresponding color image on the electrostatic latent image bearing member, and a developing device configured to develop the electrostatic latent image with a corresponding color toner (black toner, yellow toner, magenta toner, or cyan toner) to thereby form a toner image of the corresponding color toner. The image forming units each further include a transfer charger 1062 configured to transfer the toner image onto the intermediate transfer member 1050, a cleaning device, and a charge eliminating device. Hence, the image forming units can each form a single-color image of the corresponding color (black image, yellow image, magenta image, or cyan image) based on the corresponding color image information.

The black image, the yellow image, the magenta image, and the cyan image thusly formed on the corresponding electrostatic latent image bearing members (1010K, 1010Y, 1010M, and 1010C) are firstly transferred sequentially onto the intermediate transfer member 1050 that is being rotated and moved by the support rollers 1014, 1015, and 1016. Then, the images of the respective colors are overlaid on the intermediate transfer member 1050 to thereby form a composite color image.

In the sheet feeding table 120, one of sheet feeding rollers 142 is selectively rotated to bring forward sheets (recording sheets) from one of sheet feeding cassettes 144 provided multi-stages in a paper bank 143. The sheets are sent forth to a sheet feeding path 146 one by one separately via a separating roller 145, conveyed by a conveying roller 147 to be guided to a sheet feeding path 148, and stopped by being struck on a registration roller 1049. Alternatively, it is also possible that a sheet feeding roller 142 be rotated to bring forward recording sheets on a manual feeding tray 1054, and the sheets be let into a manual sheet feeding path 1053 one by one separately via a separating roller 1052 and stopped at the registration roller 1049. The registration roller 1049 may be used in an earthed state, or may be used in a biased stated in order for paper dusts of the sheet to be removed. Then, the registration roller 1049 is started to rotate to send forth a recording sheet to between the intermediate transfer member 1050 and the second transfer device 1022 so as to be in time for the composite color image synthesized on the intermediate transfer member 1050. The second transfer device 1022 secondly transfers the composite color image onto the recording sheet to thereby form a color image on the recording sheet. Any residual toner on the intermediate transfer member 1050 after having transferred the image is cleaned away by the intermediate transfer member cleaning device 1017.

The recording sheet on which the color image is formed is conveyed by the second transfer device 1022 to the fixing device 1025, and has the composite color image fixed thereon by the fixing device 1025 by heat, pressure, or both thereof. After this, the recording sheet is switched by a switching claw 1055 to a discharging roller 1056 to be discharged and stacked on a sheet discharging tray 1057. Alternatively, the recording sheet is switched by the switching claw 1055 to the sheet overturning device 1028 to be overturned and guided again to the transfer position, and after having an image recorded also on the back side thereof, discharged by the discharging roller 1056 and stacked on the sheet discharging tray 1057.

### EXAMPLES

### (Example 1)

### [Production of Reclaimed Resin Composition]

ABS resin (indicated as resin A in Table 1-1) recovered from waste home appliances (50 parts by mass) was mixed with addition-purpose ABS resin (35 parts by mass) and phosphorus-based flame retardant (15 parts by mass).

ABS resin (SANTAC AT-08 manufactured by Nippon A&L Inc.) (indicated as resin B in Table 1-1), of which butadiene content was 12% by mass relative to the total mass of acrylonitrile, butadiene, and styrene was used as the addition-purpose ABS resin.

PX-200 (manufactured by Daihachi Chemical Industry Co., Ltd.) (indicated as phosphorus-based flame retardant A in Table 1-1) was used as the phosphorus-based flame retardant.

As the mixing, they were dry-blended, and after this, the resulting mixture was fed to a hopper and melt-kneaded at 210°C with a biaxial kneading extruder, to thereby manufacture a molding pellet of Example 1 of about 3 mm square.

### (Example 2)

ABS resin recovered from waste home appliances (indicated as resin A in Table 1-1) (50 parts by mass) was mixed with addition-purpose ABS resin (35 parts by mass) and phosphorus-based flame retardant (15 parts by mass).

ABS resin (TECHNO ABS 300 manufactured by Techno Polymer Co., Ltd.) (indicated as resin C in Table 1-1), of which butadiene content was 16% by mass relative to the total mass of acrylonitrile, butadiene, and styrene was used as the addition-purpose ABS resin.

PX-200 (manufactured by Daihachi Chemical Industry Co., Ltd.) (indicated as phosphorus-based flame retardant A in Table 1-1) was used as the phosphorus-based flame retardant.

A molding pellet of Example 2 was manufactured in the same manner as Example 1, except those above.

### (Example 3)

ABS resin recovered from waste home appliances (indicated as resin A in Table 1-1) (50 parts by mass) was mixed with addition-purpose ABS resin (35 parts by mass), first phosphorus-based flame retardant (12 parts by mass), and second phosphorus-based flame retardant (3 parts by mass).

ABS resin (SANTAC AT-08 manufactured by Nippon A&L Inc.) (indicated as resin B in Table 1-1) was used as the addition-purpose ABS resin.

PX-200 (manufactured by Daihachi Chemical Industry Co., Ltd.) (indicated as phosphorus-based flame retardant A in Table 1-1) was used as the first phosphorus-based flame retardant, and FP-2200 (manufactured by ADEKA Corporation) (indicated as phosphorus-based flame retardant B in Table 1-1) was used as the second phosphorus-based flame retardant.

A molding pellet of Example 3 was manufactured in the same manner as Example 1, except those above.

### (Example 4)

ABS resin recovered from waste home appliances (indicated as resin A in Table 1-1) (50 parts by mass) was mixed with addition-purpose ABS resin (35 parts by mass), first phosphorus-based flame retardant (12 parts by mass), and third phosphorus-based flame retardant (3 parts by mass).

ABS resin (SANTAC AT-08 manufactured by Nippon A&L Inc.) (indicated as resin B in Table 1-1) was used as the addition-purpose ABS resin.

X-200 (manufactured by Daihachi Chemical Industry Co., Ltd.) (indicated as phosphorus-based flame retardant A in Table 1-1) was used as the first phosphorus-based flame retardant, and FP-110 (manufactured by Fushimi Pharmaceutical Co., Ltd.) (indicated as phosphorus-based flame retardant C in Table 1-1) was used as the third phosphorus-based flame retardant.

A molding pellet of Example 4 was manufactured in the same manner as Example 1, except those above.

### (Example 5)

A molding pellet of Example 5 was manufactured in the same manner as Example 2, except that the amount of ABS resin (TECHNO ABS 300 manufactured by Techno Polymer Co., Ltd.) used was changed to 15 parts by mass, and the amount of PX-200 (manufactured by Daihachi chemical Industry Co., Ltd.) used was changed to 35 parts by mass.

### (Comparative Example 1)

A molding pellet of Comparative Example 1 was manufactured in the same manner as Example 1, except that ABS resin recovered from waste home appliances (indicated as resin A in Table 1-2) was used in an amount of 100 parts by mass, and no addition-purpose resin and phosphorus-based flame retardant were used.

### (Comparative Example 2)

A molding pellet of Comparative Example 2 was manufactured in the same manner as Comparative Example 1, except that ABS resin (SANTAC AT-08 manufactured by Nippon A&L Inc.) (indicated as resin B in Table 1-2) was used as the ABS resin.

### (Comparative Example 3)

A molding pellet of Comparative Example 3 was manufactured in the same manner as Comparative Example 1, except that ABS resin (TECNO ABS 300 manufactured by Techno Polymer Co., Ltd.) (indicated as resin C in Table 1-2) was used as the ABS resin.

### (Comparative Example 4)

A molding pellet of Comparative Example 4 was manufactured in the same manner as Comparative Example 1, except that ABS resin recovered from waste home appliances (indicated as resin A in Table 1-2) (50 parts by mass) and ABS resin (SANTAC AT-08 manufactured by Nippon A&L Inc.) (indicated as resin B in Table 1-2) (50 parts by mass) were used as the ABS resin.

### (Comparative Example 5)

A molding pellet of Comparative Example 5 was manufactured in the same manner as Comparative Example 1, except that ABS resin recovered from waste home appliances (indicated as resin A in Table 1-2) (50 parts by mass) and ABS resin (TECNO ABS 300 manufactured by Techno Polymer Co., Ltd.) (indicated as resin C in Table 1-2) (50 parts by mass) were used as the ABS resin.

### [Vertical Flame Test according to UL94 Standard]

International standard for flame retardancy of resin materials (IEC60950) requires that materials meeting UL94 standard (Underwriters Laboratories Inc., standard) be used for a source of ignition or a portion that involves any risk of catching fire.

Hence, in the present embodiment, a testing method according to UL94 standard was employed for evaluation. The test was conducted according to a method prescribed as "20 mm vertical flame test" in methods B(ASTM D3801) in International Standard IEC60695-11-10. Any component that would be assembled into the body of an image forming apparatus as an internal component of the enclosure, is required to get an evaluation of V-2 or greater in this evaluation method.

Specifically, the pellet manufactured as above was dried at 80°C for 5 hours with a shelf-type hot-air dryer. After this, a test piece strip for UL94 vertical flame test was manufactured with an electromotive injection molder having a mold clamping force of 100 tons, under the conditions of mold temperature of 40°C, cylinder temperature of 220°C, injection speed of 20 mm/second, injection pressure of 100 MPa, and cooling time of 30 seconds. The size of the manufactured test piece strip was 13 mm in width, 125 mm in length, and 1.6 mm in thickness.

The test piece was aged at 50°C for 72 hours, and after this, cooled for 3 hours in a desiccator having a humidity of 20%. Then, the vertical flame test was conducted according to the following method, for 5 test pieces as one set.

The top end of each test piece was clamped to hold the test piece vertically, and absorbent cotton (0.8 g or less, about 50 mm square) was put 300±10 mm under the lower end of each test piece. Then, according to the flame test described below, drop of melt onto the absorbent cotton was confirmed.

With a burner, each test piece was subjected to first flame contact for 10±1 seconds from the lower end thereof, and after this, the burner was taken away from the test piece at a speed of about 300 mm/second. When the combustion became extinct, the burner was immediately returned to the lower end of the sample to perform second flame contact for 10±1 seconds.

Flame contact was performed a total of 10 times, namely twice per each of the 5 test pieces, and combustion time of each test piece was recorded. Here, "combustion time" means a time for which combustion lasted after the flame was taken away.

The first combustion time was t1, the second combustion time was t2, and after-combustion ember lasting time after the second flame contact was t3. Here, "after-combustion ember lasting time" means a time for which such a state lasted in which the flame was extinct from the test piece, but a red ember lasted in the test piece.

The judging criteria of the vertical flame test according to the above UL94 standard are as follows.
(1) When t1 and t2 of each test piece were 10 seconds or shorter, the judgment was V-0. When t1 and t2 of each test piece were 30 seconds or shorter, the judgment was V-1 or V-2. The judging criterion to distinguish between V-1 and V-2 was whether the absorbent cotton was ignited by the instillation during the combustion or not, as will be described in (5) below. When the absorbent cotton was ignited, the judgment was V-2. When the absorbent cotton was not ignited, the judgment was V-1.
(2) When t1+t2 of all of the 5 test pieces was 50 seconds or shorter, the judgment was V-0. When it was 250 seconds or shorter, the judgment was V-1 or V-2.
(3) When t2+t3 of each test piece was 30 seconds or shorter, the judgment was V-0. When it was 60 seconds or shorter, the judgment was V-1 or V-2.
(4) When the clamp was not burned, the judgment was pass. When the clamp was burned, the judgment was fail.
(5) As for ignition of the absorbent cotton by burning or falling materials, when ignition did not occur, the judgment was V-0 or V-1. When ignition occurred, the judgment was V-2. The judging criterion to distinguish between V-0 and V-1 was whether t1+t2 was 50 seconds or shorter in above (2). When it was 50 seconds or shorter, the judgment was V-0. When it was 250 seconds or shorter but longer than 50 seconds, the judgment was V-1. Further, when t2+t3 was 30 seconds or shorter in above (3), the judgment was V-0, whereas when it was 60 seconds or shorter but longer than 30 seconds, the judgment was V-1.

Judging criteria for the judging results of (1) to (5) above were as follows.
A: When the judgment was V-0, V-1, or V-2 in all of the above points
B: When V-2 was not achieved but flame retardancy was exhibited
C: When V-2 was not achieved and flame retardancy was not exhibited

### [Charpy Impact Test]

The resin composition of the present embodiment was subjected to Charpy impact strength test. A Charpy impact test is an impact test in which an impact was given to a rectangular-column-shaped test piece having a notch to break the test piece and to evaluate the energy required to break the test piece and the toughness of the test piece.

The 3 mm-square molding pellet described above was dried at 80°C for 5 hours with a shelf-type hot-air dryer. After this, a test piece strip for Charpy impact test was manufactured with an electromotive injection molder having a mold clamping force of 100 tons, under the conditions of mold temperature of 40°C, cylinder temperature of 220°C, injection speed of 20 mm/second, injection pressure of 100 MPa, and cooling time of 30 seconds. The size of the manufactured test piece strip was 80 mm in length, 4 mm in width, and 10 mm in height.

The obtained test piece strip was subjected to impact strength test according to a method prescribed in JIS K7111-1.

The judging criteria were as follows.
A: 7 kJ/m² for greater
B: 5 kJ/m² or greater but less than 7 kJ/m²
C: less than 5 kJ/m²

The judgment results are shown in Tables 1-1 and 1-2.

**Table 1-1**

| Composition | Ex. 1 | Ex. 2 | Ex. 3 | Ex. 4 | Ex. 5 |
|---|---|---|---|---|---|
| Resin A (% by mass) | 50 | 50 | 50 | 50 | 50 |
| Resin B (% by mass) | 35 | - | 35 | 35 | - |
| Resin C (% by mass) | - | 35 | - | - | 15 |
| Phosphorus-based flame retardant A (% by mass) | 15 | 15 | 12 | 12 | 35 |
| Phosphorus-based flame retardant B (% by mass) | - | - | 3 | - | - |
| Phosphorus-based flame retardant C (% by mass) | - | - | - | 3 | - |
| Ratio of butadiene (%) | 13.2 | 14.25 | 13.2 | 13.2 | 11.25 |
| Flammability evaluation | A | A | A | A | A |
| Impact resistance evaluation | A | A | A | A | B |

**Table 1-2**

| Composition | Comp. Ex. 1 | Comp. Ex. 2 | Comp. Ex. 3 | Comp. Ex. 4 | Comp. Ex. 5 |
|---|---|---|---|---|---|
| Resin A (% by mass) | 100 | - | - | 50 | 50 |
| Resin B (% by mass) | - | 100 | - | 50 | - |
| Resin C (% by mass) | - | - | 100 | - | 50 |
| Phosphorus-based flame retardant A (% by mass) | - | - | - | - | - |
| Phosphorus-based flame retardant B (% by mass) | - | - | - | - | - |
| Phosphorus-based flame retardant C (% by mass) | - | - | - | - | - |
| Ratio of butadiene (%) | 18 | 12 | 15 | 15 | 16.5 |
| Flammability evaluation | C | B | B | B | B |
| Impact resistance evaluation | A | A | A | A | A |

As shown in Table 1-1, the reclaimed resin compositions of the present embodiment satisfied impact resistance and flame retardancy at the same time.

On the other hand, the resin compositions of Comparative Examples did not satisfy impact resistance and flame retardancy at the same time

Aspects of the present invention are as follows, for example.
<1> A reclaimed resin composition, including:
   recovered acrylonitrile butadiene styrene copolymer resin;
   additional acrylonitrile butadiene styrene copolymer resin; and
   phosphorus-based flame retardant,
   wherein the amount of butadiene relative to the total mass of the reclaimed resin composition is from 10% by mass to 18% by mass.
<2> The reclaimed resin composition according to <1>,
   wherein the amount of butadiene relative to the total mass of the reclaimed resin composition is from 12% by mass to 16% by mass.
<3> A molding,
   wherein the molding is obtained by molding the reclaimed resin composition according to <1> or <2>.
<4> The molding according to <3>,
   wherein the molding is a component of an image forming apparatus in which electrophotography, print technology, or inkjet technology is employed.
<5> The molding according to <4>,
   wherein the image forming apparatus includes at least any of an image forming unit, an intermediate transfer member, and a second transfer device, and
   wherein the molding is used for at least any of a housing of the image forming unit, a housing of the intermediate transfer member, and a housing of the second transfer device.
<6> The molding according to any one of <3> to <5>,
   wherein the molding is manufactured such that material composition information representing at least any of kind and grade of material used therein is identifiable.
<7> An image forming apparatus, including
   the molding according to any one of <3> to <6>
<8> A method for producing a reclaimed resin composition, including
   mixing recovered acrylonitrile butadiene styrene copolymer resin, additional acrylonitrile butadiene styrene copolymer resin, and a phosphorus-based flame retardant at a mixing ratio at which the amount of butadiene relative to the total mass of a mixture to be obtained will be from 10% by mass to 18% by mass.

## Claims

1. A reclaimed resin composition, comprising:
recovered acrylonitrile butadiene styrene copolymer resin;
additional acrylonitrile butadiene styrene copolymer resin; and
a phosphorus-based flame retardant,
wherein an amount of butadiene relative to a total mass of the reclaimed resin composition is from 10% by mass to 18% by mass.

2. The reclaimed resin composition according to claim 1,
wherein the amount of butadiene relative to the total mass of the reclaimed resin composition is from 12% by mass to 16% by mass.

3. A molding,
wherein the molding is obtained by molding the reclaimed resin composition according to claim 1 or 2.

4. The molding according to claim 3,
wherein the molding is a component of an image forming apparatus in which electrophotography, print technology, or inkjet technology is employed.

5. The molding according to claim 4,
wherein the image forming apparatus comprises any of an image forming unit, an intermediate transfer member, and a second transfer device, and
wherein the molding is used for at least any of a housing of the image forming unit, a housing of the intermediate transfer member, and a housing of the second transfer device.

6. The molding according to any one of claims 3 to 5,
wherein the molding is manufactured such that material composition information representing at least any of kind and grade of material used therein is identifiable.

7. An image forming apparatus, comprising:
the molding according to any one of claims 3 to 6.

8. A method for producing a reclaimed resin composition, comprising:
mixing recovered acrylonitrile butadiene styrene copolymer resin, additional acrylonitrile butadiene styrene copolymer resin, and a phosphorus-based flame retardant at a mixing ratio at which an amount of butadiene relative to a total mass of a mixture to be obtained will be from 10% by mass to 18% by mass

## Patentansprüche

1. Regenerierte Harzzusammensetzung umfassend:
wiedergewonnenes Acrylnitril-Butadien-Styrol-Copolymerharz;
zusätzliches Acrylnitril-Butadien-Styrol-Copolymerharz; und
ein Flammschutzmittel auf der Basis von Phosphor,
wobei eine Menge Butadien mit Bezug auf eine Gesamtmasse der regenerierten Harzzusammensetzung 10 Masse-% bis 18 Masse-% beträgt.

2. Regenerierte Harzzusammensetzung nach Anspruch 1, wobei die Menge Butadien mit Bezug auf eine Gesamtmasse der regenerierten Harzzusammensetzung 12 Masse-% bis 16 Masse-% beträgt.

3. Formteil, wobei das Formteil durch Formen der regenerierten Harzzusammensetzung nach Anspruch 1 oder 2 erhalten wird.

4. Formteil nach Anspruch 3, wobei das Formteil ein Teil einer bilderzeugenden Vorrichtung ist, bei der Elektrophotographie, Drucktechnologie oder Tintenstrahltechnologie angewendet wird.

5. Formteil nach Anspruch 4, wobei die bilderzeugende Vorrichtung irgendeines von einer bilderzeugenden Einheit, einem intermediären Übertragungsteil und einer zweiten Übertragungsvorrichtung umfasst und
wobei das Formteil für mindestens irgendeines von einem Gehäuse der bilderzeugenden Einheit, einem Gehäuse des intermediären Übertragungsteils und einem Gehäuse der zweiten Übertragungsvorrichtung verwendet wird.

6. Formteil nach einem der Ansprüche 3 bis 5, wobei das Formteil derart gefertigt ist, dass die Materialzusammensetzungsinformationen, die mindestens irgendeine Art und Güte des hier verwendeten Materials darstellen, identifizierbar sind.

7. Bilderzeugende Vorrichtung, umfassend: das Formteil nach einem der Ansprüche 3 bis 6.

8. Verfahren für die Herstellung einer regenerierten Harzzusammensetzung umfassend: das Mischen von wiedergewonnenem Acrylnitril-Butadien-Styrol-Copolymerharz,
zusätzlichem Acrylnitril-Butadien-Styrol-Copolymerharz und einem Flammschutzmittel auf der Basis von Phosphor in einem Mischverhältnis, bei dem eine Menge Butadien mit Bezug auf eine Gesamtmasse einer zu erhaltenden Mischung 10 Masse-% bis 18 Masse-% betragen wird.

## Revendications

1. Composition de résine de récupération, comprenant :
de la résine copolymère d'acrylonitrile-butadiène-styrène récupérée ;
de la résine copolymère d'acrylonitrile-butadiène-styrène supplémentaire ; et
un agent ignifuge à base de phosphore,
où une quantité de butadiène par rapport à une masse totale de la composition de résine de récupération est de 10 % en masse à 18 % en masse.

2. Composition de résine de récupération selon la revendication 1, où la quantité de butadiène par rapport à la masse totale de la composition de résine de récupération est de 12 % en masse à 16 % en masse.

3. Moulage, où le moulage est obtenu par moulage de la composition de résine de récupération selon la revendication 1 ou 2.

4. Moulage selon la revendication 3, où le moulage est un composant d'un appareil de formation d'image dans lequel l'électrophotographie, la technologie d'impression ou la technologie par jet d'encre est utilisée.

5. Moulage selon la revendication 4, où l'appareil de formation d'image comprend n'importe laquelle d'une unité de formation d'image, d'un élément de transfert intermédiaire, et d'un second dispositif de transfert, et
où le moulage est utilisé pour au moins n'importe lequel parmi un logement d'unité de formation d'image, un logement d'élément de transfert intermédiaire et un logement du second dispositif de transfert.

6. Moulage selon l'une quelconque des revendications 3 à 5, où le moulage est fabriqué de sorte que l'information sur la composition de matière représentant au moins n'importe laquelle parmi le type et la qualité de la matière utilisée ci-inclus est identifiable.

7. Appareil de formation d'image, comprenant : le moulage selon l'une quelconque des revendications 3 à 6.

8. Procédé de production d'une composition de résine de récupération, comprenant :
le mélange d'une résine de copolymère d'acrylonitrile-butadiène-styrène de récupération, de résine de copolymère d'acrylonitrile-butadiène-styrène supplémentaire, et d'un agent ignifuge à base de phosphore sous un rapport de mélange auquel une quantité de butadiène par rapport à une masse totale d'un mélange à obtenir sera de 10 % en masse à 18 % en masse.
